# EUROPEAN PATENT SPECIFICATION

(11) **EP 1 284 099 B1**
(45) Date of publication and mention of the grant of the patent: **07.06.2006**
(21) Application number: 02078206.6
(22) Date of filing: 05.08.2002
(51) Int. Cl.: A01G 9/02, A01G 31/06

(54) **Method for forcing chicory**
Verfahren zum Treiben von Chicorée
Procédé pour le forçage de l'endive

(30) Priority: 15.08.2001 NL 1018767
(43) Date of publication of application: 19.02.2003
(73) Proprietor: Bulbfust B.V., 1771 RP Wieringerwerf (NL); Falmic B.V., 1607 MT Hem (NL)
(72) Inventor: Ruiter, Adrianus Jacobus Johannes, 1693 BN Wervershoof (NL); Groot, Joni, 1602 HM Enkhuizen (NL); Paarlberg, Sjoerd, 1771 GG Wieringerwerf (NL)
(74) Representative: Van Breda, Jacobus

(56) References cited:
- FR-A- 2 433 901
- JP-A- 2 242 621
- US-A- 4 505 068
- US-A- 5 042 195
- DATABASE WPI Section PQ, Week 198425 Derwent Publications Ltd., London, GB; Class P13, AN 1984-157057 XP002254029 -& SU 1 045 870 A (MOSC ARIC ACAD), 7 October 1983 (1983-10-07)
- PATENT ABSTRACTS OF JAPAN vol. 014, no. 562 (C-0788), 13 December 1990 (1990-12-13) -& JP 02 242621 A (SHOZO INAYAMA), 27 September 1990 (1990-09-27)

## Description

The invention relates to a method for forcing chicory.

Traditionally, chicory is grown in so-called chicory forcing trays. The roots are placed upright into the trays, one root up against the next and depending on the root diameter and the size of the chicory tray, the number of roots per tray may vary between 320 and 550 or more. A problem with the traditional chicory trays is that because of the relatively large number of roots in one tray, some of the chicory heads that develop at the top of the roots, become squashed.

An apparatus comprising a forcing tray, into which the chicory roots are inserted in an upright position, and for receiving nutrients for the chicory, while the forcing tray includes positioning members for keeping the roots upright, is known from the Dutch Patent NL-C-1005207.

In the known apparatus the forcing tray is embodied with slots able to receive rows of chicory roots, which rows are separate from one another. In the separate slots the chicory roots are kept in place by means of positioning members. The positioning members are formed by elastic pliable projections extending inward from supports and able to engage the chicory roots.

A drawback of the known apparatus for forcing chicory is that it involves a complicated construction, while not excluding the possibility of the roots in the rows of chicory roots received in the slots, becoming entangled during the growing of the chicory.

From US-A-4 505 068 an apparatus is known, comprising a tray which includes positioning members wherein the positioning members are embodied in the form of a grid that can be placed in the tray and is provided with mesh.

From JP-A-02242621 is known a method for forcing chicory in a forcing tray having said line positioning members.

According to the invention a method is proposed for forcing chicory in accordance with claim 1. In this way the chicory roots are not packed closely together, allowing the chicory growing on top of the chicory roots sufficient space to fully develop, resulting in a better crop per taproot. This increase in production and the improved quality achieved with the method according to the invention, at least compensates for the smaller number of roots that can be accommodated in the forcing tray.

The known apparatus provides an ideal division between the available surface in the forcing tray and the number of taproots used. Since the mesh number of the grid is known beforehand, it is moreover possible to reliably predict the chicory production and the number of roots to be accommodated in the forcing tray, nutrients and further material that may be required.

In addition, when using nutrients in liquid form, the use of the grids proposed in accordance with the invention leads to a balanced distribution of nutrients and a correspondingly adequate uptake of the nutrients by the taproots, while also facilitating the administration of remedial means to combat production-inhibiting factors such as deceases and pests.

The regularity with which the taproots and the chicory are arranged by the mesh of the grid further affords an ideal possibility for the complete mechanisation of the harvest, since the position of the roots and the chicory is known.

The grid that is used is assembled from snap-connected substantially uniform strips. Such strips may be produced by using various techniques. These may include injection moulding, die-cutting and punching. When such strips are made of plastic, they may be produced by the above-mentioned techniques at very low cost and also in different length, so that the size of the grid to be used can be easily adapted to the situation on hand. In a further aspect of the invention the known grid is used at the underside with spacers to keep the grid off the bottom of the forcing tray. In this way the grid does not, or only very slightly, influence the circulation of the liquid nutrients supplied to the forcing tray.

The size of the mesh in the grid depends on a number of factors such as the variety of roots used, the forcing method, the desired weight of the chicory and other circumstances. Practice has shown mesh dimensions of 47 x47 mm to give good results. The top side of the grid should then preferably be 70 mm from the bottom of the forcing tray. One thing and another insures an appropriate relationship between the number of roots of the taproots and the available growing surface.

The mesh of the grid may of course be given any other desired shape such as rectangular or polygonal.

The invention will now be further elucidated with reference to the drawing, which
- in Figure 1 shows a bare forcing tray, and
- in Figure 2 shows a forcing tray provided with a grid according to the invention, and
- in Figure 3 shows a chicory with root.

Identical parts in the figures carry identical reference numbers.

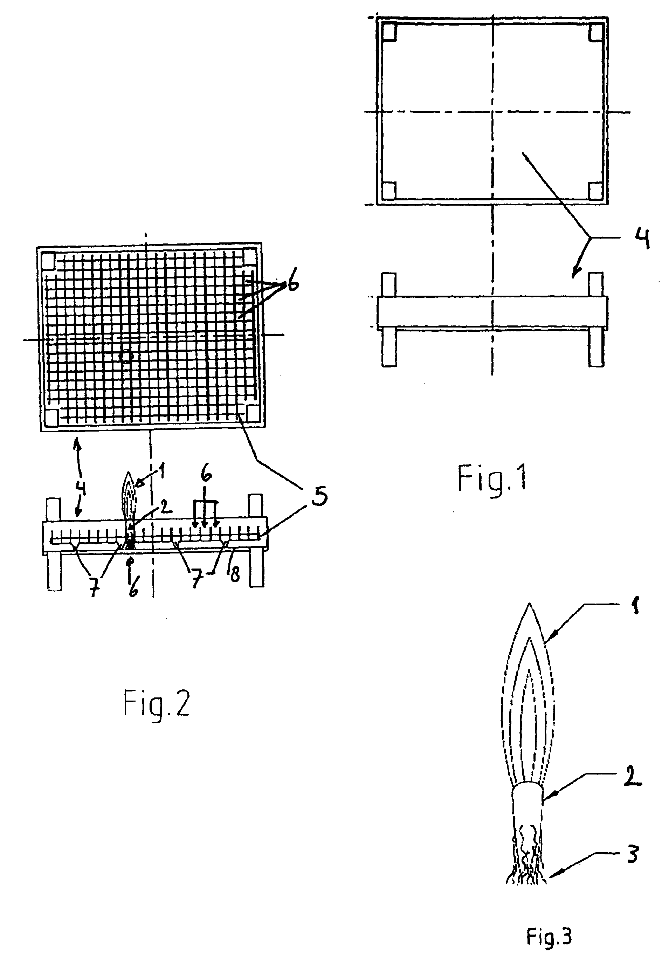

Referring first to Figure 3, which shows a schematic illustration of a chicory, comprising leaves 1 growing on a chicory taproot 2. The chicory taproot 2 further has a number of roots 3 (root-hairs). In a manner known to the person skilled in the art, chicory taproots 2 with developing leaves 1 are placed in apparatuses for forcing chicory. Such an apparatus comprises a forcing tray 4 shown in Figure 1. Figure 1 shows the forcing tray 4 in top and side view without any of the other features with which the forcing tray 4 is equipped in practice, such as facilities for the supply of liquid nutrients and water.

Figure 2 shows that the forcing tray 4 is equipped with a grid 5, which as the figure clearly shows, is provided with a plurality of meshes 6. Each mesh 6 serves for the accommodation of one single chicory taproot 2, as is clearly shown in the side view of Figure 2.

In a manner obvious to the person skilled in the art, which requires no further explanation, the grid 5 is assembled from snap-connected, substantially uniform strips. The strips may be made to metal but the use of plastic strips is preferred. Figure 2 further shows that at the underside the grid 5 is provided with spacers 7 for keeping the grid 5 off the forcing tray 8. This gives the root-hairs 3 at the bottom of the taproots 2 sufficient space. The meshes 6 of the grid 5 may have various shapes such as square, rectangular, or polygonal. If the meshes 6 are square, a suitable dimensioning is 47 x 47 mm. The size of the spacers 7 of the grid 5 is preferably such that the distance between the top side of the grid 5 and the bottom of the forcing tray 8 is 70 mm.

## Claims

1. Method for forcing chicory in an apparatus that comprises a forcing tray (4) which includes positioning members for keeping the chicory roots (1) upright, which members are embodied in the form of a grid (5), assembled from snap-connected substantially uniform strips, that is placed in the forcing tray (4) and is provided with meshes (6), and whereby one single uncovered chicory root (2) is inserted into each mesh (6).

2. Method according to claim 1, wherein at the underside the grid (5) is provided with spacers (7) to keep the grid (5) off the bottom of the forcing tray (4).

## Patentansprüche

1. Verfahren zum Treiben von Chicoree in einer Vorrichtung, die einen Treibkasten (4) umfasst, der Positionierungsbauglieder zum aufrecht Halten der Chicoreewurzeln (2) enthält, wobei die Bauglieder in der Form eines Gitters (5) ausgeführt sind, das aus schnappverbundenen, im Wesentlichen einheitlichen Streifen zusammengesetzt ist, die in den Treibkasten (4) platziert sind und mit Maschen (6) versehen sind, und wodurch in jede Masche (6) eine einzelne unbedeckte Chicoreewurzel (2) eingefügt wird.

2. Verfahren gemäß Anspruch 1, bei dem an der Unterseite des Gitters (5) Abstandhalter (7) vorgesehen sind, um das Gitter (5) von der Unterseite des Treibkastens (4) fern zu halten.

## Revendications

1. Procédé pour le forçage des endives dans un appareil qui comprend un bac de forçage (4) qui inolut des éléments de positionnement destinés à maintenir les racines des endives (2) droites, lesquels éléments sont incarnés sous la forme d'une grille (5), assemblée à partir de bandes sensiblement uniformes reliées par des boutons pressions, qui est placée dans le bac de forçage (4) et est pourvue de mailles (6), et de sorte qu'une seule racine d'endive (2) découverte est insérée dans chaque maille (6).

2. Procédé selon la revendication 1, dans lequel, au niveau de la surface inférieure, la grille (5) est pourvue d'entretoises (7) pour maintenir la grille (5) à distance du bas du bac de forçage (4).
